# EUROPÄISCHE PATENTSCHRIFT

(11) **EP 2 654 450 B1**
(45) Veröffentlichungstag und Bekanntmachung des Hinweises auf die Patenterteilung: **29.06.2016**
(21) Anmeldenummer: 11799686.8
(22) Anmeldetag: 16.12.2011
(51) Int. Cl.: C11B 1/00, C11B 1/10, C11B 1/14, A23L 33/105, A23L 33/115, A23L 5/20, C11B 1/02, C11B 3/04, C10L 1/02, C10L 1/18, C10G 1/04

(54) **VERFAHREN ZUR GEWINNUNG EINES KRAFTSTOFFES AUS FETTREICHEN JATROPHASAMEN**
METHOD FOR OBTAINING A FUEL FROM JATROPHA SEEDS THAT ARE RICH IN FAT
PROCÉDÉ POUR OBTENIR UN CARBURANT À PARTIR DE GRAINES DE JATROPHA RICHES EN HUILE

(30) Priorität: 21.12.2010 DE 102010055419
(43) Veröffentlichungstag der Anmeldung: 30.10.2013
(73) Patentinhaber: GEA Mechanical Equipment GmbH, 59302 Oelde (DE)
(72) Erfinder: KIRCHNER, Stefan, 33334 Gütersloh (DE); ULLMANN, Detlef, 59302 Oelde (DE); SPEISER, Ines, 33415 Verl (DE)
(74) Vertreter: Specht, Peter
(86) Internationale Anmeldenummer: PCT/EP2011/073109
(87) Internationale Veröffentlichungsnummer: WO 2012/084730

(56) Entgegenhaltungen:
- US-A- 4 808 426
- DATABASE WPI Week 199523 Thomson Scientific, London, GB; AN 1995-176769 XP002668534, & RU 2 020 145 C1 (EKOTEKH STOCK CO) 30. September 1994 (1994-09-30)
- Jan De Jongh ET AL: "Jatropha oil quality related to use in diesel engines and refining methods", , 10. September 2007 (2007-09-10), Seiten 1-11, XP55018066, Gefunden im Internet: URL:http://www.arrakis.nl/reports/Techn_No te_Jatro_oil_ quality_final.pdf [gefunden am 2012-01-31]
- KHEE CHOON RHEE ET AL: "Silmutaneous recovery of protein and oil from raw peanuts in an aqueous system", JOURNAL OF FOOD SCIENCE, WILEY-BLACKWELL PUBLISHING, INC, US , Bd. 37 1. Januar 1972 (1972-01-01), Seiten 90-93, XP002590774, ISSN: 0022-1147 Gefunden im Internet: URL:http://www3.interscience.wiley.com/cgi -bin/fulltext/119682285/PDFSTART [gefunden am 2010-07-05]
- BERCHMANS H J ET AL: "Biodiesel production from crude Jatropha curcas L. seed oil with a high content of free fatty acids", BIORESOURCE TECHNOLOGY, ELSEVIER BV, GB, Bd. 99, 1. Januar 2008 (2008-01-01), Seiten 1716-1721, XP002593865, ISSN: 0960-8524, DOI: 10.1016/J.BIORTECH.2007.03.051

## Beschreibung

Die vorliegende Erfindung betrifft ein Verfahren nach dem Oberbegriff des Anspruchs 1. Eine Gewinnung von Öl aus fettreichen Samen ist an sich bekannt. Derzeit werden hauptsächlich folgende Verfahren eingesetzt:
1. Pressen plus Hexanextraktion
2. 2- Stufiges Pressen
3. Kaltpressung

Zur Gewinnung von Kraftstoffen werden hauptsächlich die Verfahren 1. und 2. eingesetzt, um eine möglichst hohe Ölausbeute zu erzielen. Es sei insofern auf die gattungsgemäße Schrift "Jan de Jong ET AL": "Jatropha oil quality related to use in diesel engines and refining methods", 10. September 10997, Seiten 1-11, XP 55018066 hingewiesen. Bei beiden Verfahren wird die Saat vor der Ölgewinnung nicht geschält, so dass die Schalen im entölten Schrot verbleiben und so den Nährwert ungünstig beeinflussen. Die Ölqualität bei diesen Verfahren mit hoher Ausbeute ist relativ niedrig, so dass aufwendige Raffinationsschritte nötig sind um dieses Öl als Biokraftstoff einsetzen zu können.

In der US 4 808 426 A erfolgt eine Ölgewinnung aus nativem Material wie Sojabohnen oder Korn, um ein hochwertiges Sojaöl als Nahrungsmittel zu gewinnen (Sp. 1, Z. 11 bis 26). Das Sojaöl wird als Salat- und Kochöl, sowie Brat- und Backfett genutzt. Der Ölgehalt der Sojabohne liegt bei unter 20%. Bei dem Verfahren wird nach einem Abtrennen von Schalenanteilen und einem Zerkleinern der geschälten Samen diesen Säure, und zwar z.B. bei einer Probe von 400 Gramm Sojabohnen, gemischt mit 1200 ml Öl eine sehr hoch konzentrierte (85%), 3g) Phosphorsäure, zugefügt. Dies dient zur Verringerung der Phosphorlipidgehaltes und zur Verringerung des Calzium-, Magnesium- und Eisengehaltes.

Die EP 0 267 933 A1 offenbart ein Verfahren zur Gewinnung von Pflanzenöl, bei welchem zumindest ein Reagenz zur Reduzierung des Phospholipidgehaltes zu dem ölhaltigen Material zugegeben wird. Dabei werden in vorbereitenden Schritten Pflanzen, wie z.B. Sojabohnen oder Mais, gesäubert, getrocknet und geschält.

Anschließend können diese Pflanzenteile gemahlen werden. Dabei wird beispielsweise zusätzlich Öl zugesetzt. Bei der Extraktion von Pflanzenöl aus diesen Sojabohnen oder Mais wird u.a. auch Salzsäure eingesetzt. Diese dient der Reduzierung des Phospholipidgehaltes. Dabei erfolgt eine Umwandlung eines hydrophoben Phospholipids in eine hydratisierbare Spezies. Da die Hydratisierung von Phospholipiden allerdings reversibel ist, müssen zudem auch Chelatbildner, Fällungsmittel oder dergleichen zur Stabilisierung der Phospholipide in der wässrigen Lösung eingesetzt werden.

Die GB 1 179 584 A offenbart ein Verfahren zur Gewinnung von Fetten. Dabei wurde die wässrige Extraktion von tierischen Fetten dahingehend optimiert, dass ein derartiges Fett in einem pH-Bereich zwischen 4,1 bis 5,8 extrahiert wurde. Dieser pH-Wert kann u.a. durch Zugabe von Säuren, so z.B. Salzsäure, Schwefelsäure, Zitronensäure oder Essigsäure erreicht werden.

Die WO 98/53698 A1 und die EP 1 905309 A1 offenbaren eine Verarbeitung von Rapssamen, Sojabohnen, Mais und Sonnenblumensamen. Diese werden zunächst gemahlen. Anschließend werden Feststoffe entfernt. Schließlich erfolgt ein Waschen der Öl- Phase, wobei beim Waschen ein pH-Wert zwischen 2-10 durch Zugabe von Tris-HCl einstellbar ist. Anschließend erfolgt eine Formulierung zu einer Emulsion. Diese Emulsion wird im Lebensmittelbereich und im Futtermittelbereich genutzt, aber auch in Verbindung von pharmazeutischen und kosmetischen Erzeugnissen.

Die GB 1 402 769 A offenbart ein Verfahren zur Gewinnung von Öl durch einen enzymatischen Vorgang. In Folge der enzymatischen Behandlung, welche bei pH-Werten zwischen pH=3 bis pH=6 stattfindet, kommt es zur Zersetzung der Zellwände des ölhaltigen pflanzlichen Produktes unter Freisetzung des Öls innerhalb von 2 bis 24 Stunden.

Die EP 2 163 159 A 1 offenbart eine Gewinnung von Öl aus einer Rapssaat. Dabei erfolgt nach einem Bereitstellen und Schälen der Rapssaat das Pressen der Rapssaat, wobei ein Presskuchen und Rapsöl entsteht. Das Rapsöl wird in einem Verfahrensschritt, welcher als "Degumming" bezeichnet wird, von Phospholipiden befreit, welche in einem Reaktionstank agglomerieren. Daran schließt sich ein Verfahrensschritt der Trocknung und der Veresterung an.

Dabei erfolgt durch Umesterung eine Trennung von Biodiesel und Rohglycerin. In weiteren anschließenden Schritten können Proteine und verschiedene andere Wertstoffe aus den verschiedenen Fraktionen des Rapsöls oder des Rapspresskuchens gewonnen werden. Das hier beschriebene Verfahren eignet sich nur bedingt zur Herstellung von Kraftstoffen, da die Ölausbeute beim Pressen von geschälter Rapssaat sehr niedrig ist. Bedingt durch den hohen Restfettgehalt im entölten Presskuchen lässt sich dieser nur bedingt verwerten.

Bei der Verwendung von Kraftstoffen aus Ölpflanzen hat sich insbesondere das Öl aus den Jatropa- Samen, auch Purgiernüsse genannt, als interessante Alternative erwiesen, da dieses Jatrophaöl eine höhere Cetanzahl beispielsweise gegenüber Rapsöl aufweist und da die Jatrophapflanze auch auf nährstoffarmen Böden wächst. Neben Öl sind Proteine ein wesentlicher Bestandteil der Jatropha Saat. Jedoch wirkt sich der hohe Schalenanteil der Samen mit bis zu 40 Gewichts Prozent störend aus. Werden diese nicht vor der Entölung abgetrennt, ist es schwierig ein proteinreiches, ölarmes Schrot zu gewinnen. Heutige Verfahren nutzen in erster Linie eine Pressung der Samen. Um hierbei eine hohe Ausbeute zu erreichen, ist ein nennenswerter Schalenanteil im Produkt zwingend erforderlich.

Es ist daher Aufgabe der vorliegenden Erfindung ein Verfahren zu schaffen, bei dem ein wertvoller Kraftstoff in großem Umfang aus diesen Pflanzensamen oder Nüssen gewonnen werden kann.

Diese Aufgabe wird durch die Merkmale des Anspruchs 1 gelöst.

Ein erfindungsgemäßes Verfahren zur Gewinnung eines Kraftstoff aus fetthaltigen Jatrophasamen, wobei die Jatrophasamen einen Fettgehalt von mindestens 30 Gew.-%, vorzugsweise mindestens 40 Gew.-% aufweisen, weist dabei vorzugsweise die folgenden Schritte auf: a) Abtrennen von Schalenanteilen; b) Zerkleinern von Pflanzensamen oder Nüssen; c) Zugabe von Wasser und/oder von Säure zu den zerkleinerten Pflanzensamen oder Nüssen unter Bildung einer ölhaltigen Suspension, derart, dass der Wasseranteil der Suspension größer als 35 Gew.-%, bezogen auf die Gesamtmasse der Suspension, ist; und d) Abscheiden des Rohöls aus der Suspension;

Dabei gilt für den pH-Wert der Suspension vor dem Abscheiden von Rohöl vorzugsweise: *pH* <= *3*,*5*.

Das hierbei gewonnene Rohöl ist ein Zwischenprodukt bei der Gewinnung eines Kraftstoffs. Es enthält einen Anteil an Restwasser und ggf. auch noch kleinere Feststoffpartikel des Pflanzensamens.

Das erfindungsgemäße Verfahren zur Gewinnung eines Kraftstoffs aus fetthaltigen Jatrophasamen weist zudem e) ein Ölpolieren, f) ein Neutralisieren und g) ein Trocknen des Öls auf.

Ölpolieren ist ein Verfahren zur Reinigung des Öls. Hierbei wird das Rohöl mittels Filtertechnik oder Separationstechnik weiterverarbeitet und von Feststoffresten und Wasser gereinigt oder getrennt. Dabei wird der Feststoffgehalt des polierten Rohöls derart reduziert, dass dieses Öl als Kraftstoff einsetzbar ist. Durch das Trocknen wird der Restwassergehalt im Kraftstoff etwa auf vorzugsweise 0,1 Gew-% oder weniger gesenkt.

Die hierbei gewonnene Feststoffphase eignet sich als Zwischenprodukt bei der Gewinnung eines proteinreichen Schrotes. Das so gewonnene Öl ist extrem arm an Phosphaten, Magnesium und Calzium und entspricht ohne weitere Verarbeitung poliert der Norm für Bio-Kraftstoffe (DIN 51605). Im Gegensatz zu Pressölen kann so eine aufwendige Raffination von Ölen vermieden werden.

Wasser und Säure können getrennt zur Suspension zugeführt werden oder bereits vor der Zugabe zur Suspension zu einer verdünnten Säure vermischt werden, wobei die verdünnte Säure vor der Zugabe bereits einen entsprechenden Konzentration aufweist, um den pH-Wert der Suspension auf <= 3,5 einzustellen.

Bei der Gewinnung von Kraftstoff aus Jatrophasamen mit einem Fettgehalt von mehr als 30 Gew.-%, vorzugsweise mehr als 40 Gew.-% hat es sich überraschend gezeigt, dass die Ausbeute an Rohöl bei einem pH-Wert von <= 3,5 signifikant steigt.

Erfindungsgemäß erfolgt die Gewinnung von Kraftstoff und auch gleichzeitig eines proteinreichen Schrotes aus Jatrophasamen, also den Purgiernüssen der Jatrophapflanze.

Bevorzugte Ausführungsvarianten des Verfahrens sind Gegenstand der Unteransprüche.

Zwar ist bei einem pH-Wert von <= 3,5 bereits ein signifikantes Ansteigen der Ausbeute an Kraftstoff gegenüber einer pH-neutralen Verarbeitung zu beobachten, eine besonders vorteilhafte Erhöhung der Ausbeute kann allerdings bei einer Suspension mit einem pH-Wert <= 3,2 erreicht werden.

Eine weitere Erhöhung der Ausbeute an Kraftstoff kann man erreichen, indem die Einstellung des pH-Wertes der Suspension speziell durch Salzsäure erfolgt. Einen möglichst umfangreichen Aufschluss von Rohöl aus den zerkleinerten Pflanzensamen oder Nüssen kann durch eine Verweilzeit von mindestens 30 min, vorzugsweise 30-60 min, nach der Zugabe der Säure erreicht werden. Da eine höhere Temperatur den Aufschluss des Rohöls, aus den Pflanzensamen oder den Nüssen begünstigt, ist es von Vorteil, wenn mit dem zugegebenen Wasser eine Temperatur von 60-80°C, vorzugsweise 80-95°C im Produkt eingestellt wird.

Die Pflanzensamen können vor dem Zerkleinern gereinigt werden, um so an den Pflanzen anhaftende Fremdstoffe zu beseitigen. Darüber hinaus kann der Anteil an Feststoffen und Fremdsubstanzen in der Suspension vor dem Zerkleinern durch Schälen und Trocknen im Vorfeld verringert werden.

Alternativ oder zusätzlich kann die Ausbeute an Kraftstoff erhöht werden, indem das Zerkleinern der Pflanzensamen oder Nüsse durch eine Mühle mit einem feinen Mahlgrad erfolgt. Durch den feineren Mahlgrad der Pflanzensamen oder Nüsse wird weniger Rohöl im Inneren der Feststoffanteile zurückgehalten.

Optional kann das Abscheiden des Rohöls durch mehrfaches Entölen aus der Suspension erfolgen. Dabei wird die Suspension nach einer ersten Entölung mit einem Gehalt an Rohöl von 4 Prozent oder weniger in einen zweiten Dekanter eingeleitet oder in den Dekanter der ersten Entölung für eine nochmalige Entölung der Suspension rückgeführt.

Ein Waschen des Rohöls zur Gewinnung des Kraftstoffes kann vorteilhaft in einer Zentrifuge, vorzugsweise einem Separator, erfolgen.

Nachfolgend wird die Erfindung an Hand eines Ausführungsbeispiels, der Gewinnung von Jatropha(roh)öl, unter Bezug auf die Zeichnungen näher beschrieben. Es zeigt:
Fig.1 eine Anlage zur Gewinnung eines Kraftstoffes aus Jatropha-Samen;
Fig.1a eine Anlage zur Gewinnung eines Schrotes
Fig.2 ein Diagramm zur Veranschaulichung der Abhängigkeit des Ölgehaltes in der entölten Suspension bei verschiedenen pH-Werten;
Fig.3 ein Diagramm zur Veranschaulichung der Abhängigkeit des Ölgehaltes in der entölten Suspension bei Verwendung verschiedener Säuren; und
Fig 4 ein Diagramm zur Veranschaulichung der Abhängigkeit des Ölgehaltes in der entölten Suspension bei verschiedenen Verweilzeiten.

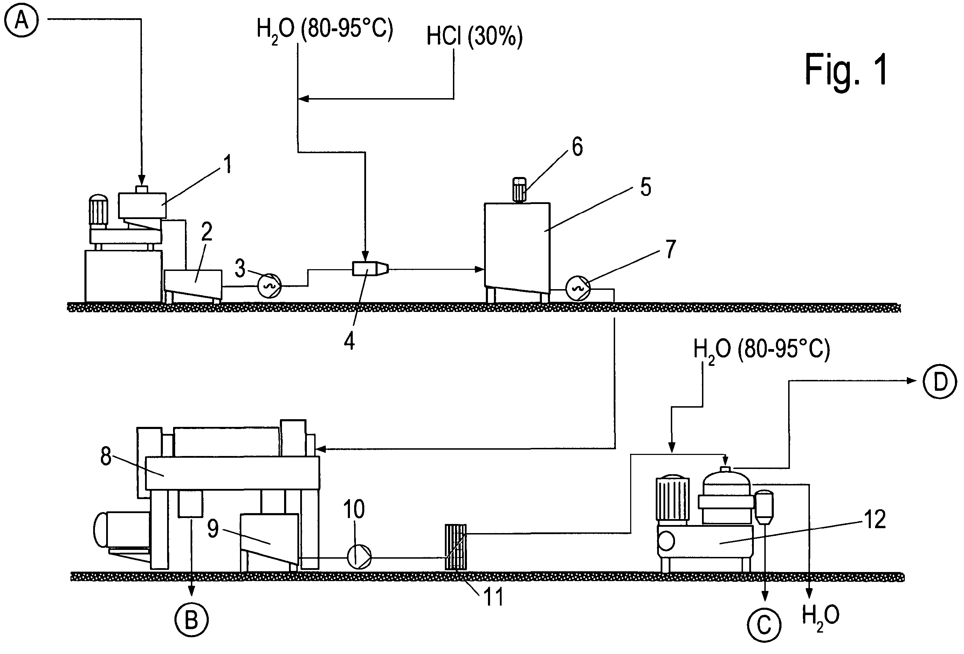

Fig. 1 zeigt schematisch eine Anlage mit welcher in bevorzugter Ausgestaltung Jatropha-Samen A zu einem Jatropha(roh)öl D verarbeitet werden, welches als Kraftstoff geeignet ist, wobei die Jatropha-Samen bzw. -nüsse vorab vorzugsweise gereinigt und geschält wurden

In einem ersten Schritt der Bearbeitung werden die Jatropha-Samen A zunächst zum Zerkleinern in eine Mühle 1 überführt. Dabei werden die Purgiernüsse in einem Mahlwerk aufgebrochen und zerkleinert. Dieser Mahlprozess kann ggf. durch Zufuhr weiteren Öls zusätzlich begünstigt werden.

Die Bruchstücke der zerkleinerten Jatropha-Samen weisen dabei eine bestimmte mittlere Korngröße auf, welche durch das Mahlwerk vorgegeben wird. Dies kann beispielsweise in Spaltmühlen durchgeführt werden.

Bereits vor dem Zerkleinern werden die Jatropha-Samen geschält und/oder getrocknet. Durch diese vorbereitenden Schritte wird die Zerkleinerung bzw. das Mahlen der Jatropha-Samen erleichtert. Gleichzeitig wird durch das Abtrennen der Schalenanteile der Proteingehalt signifikant erhöht.

Dies kann als entscheidender Vorteil gegenüber den heute verwendeten Verfahren gesehen werden, da jetzt die Schalenfraktion separat genutzt werden kann, und der Proteingehalt des entölten Schrotes eine Verwendung verschiedener Art zulässt.

Vorzugsweise werden mehr als 50%, insbesondere mehr als 80% und besonders bevorzugt die gesamten Schalenanteile entfernt.

Nach dem Mahlen werden die zerkleinerten Jatropha-Samen als Öl-Feststoffgemisch in einen Puffertank 2 überführt. Von dort werden sie über eine erste Exzenterschneckenpumpe 3 zu einem Mischer bzw. einer Mischstation 4 transportiert.

In der Mischstation 4 wird dem vermahlenen Produkt heißes Wasser und Säure, vorzugsweise HCl, zugeführt und so vermischt, dass die Suspension eine erhöhte Temperatur von 60-80°C, vorzugsweise 80 - 95°C aufweist.

Bei diesem Einleiten von heißem Wasser und Säure, entsteht eine Suspension aus Feststoffen, Öl und Wasser, die einen pH-Wert von **<=** 3,5 aufweist.

Für eine Steigerung der Ausbeute an Kraftstoff und zur Gewinnung eines öl- armen Schrotes ist es von wesentlicher Bedeutung, dass die gebildete Suspension einen pH-Wert von <= 3,5 aufweist.

Dabei können das heiße Wasser und die Säure, vorzugsweise konzentrierte Salzsäure, auch getrennt in die Mischstation eingeleitet werden und durch intensives Rühren eine Suspension mit einem pH-Wert von <= 3,5 ausbilden. Dieses Abfolge von Verfahrensschritten ist zwar nicht bevorzugt, da lokal eine hohe Konzentration an Säure in der Suspension gebildet wird, kann aber alternativ zur Zugabe einer verdünnten Säure für die Bildung einer Suspension verwandt werden.

In einer weiteren, allerdings ebenfalls weniger bevorzugten Ausführungsvariante der Erfindung kann zur Einstellung des pH-Wertes auch eine andere Säure, so z.B. Schwefelsäure oder Zitronensäure, anstelle von Salzsäure, genutzt werden. Anschließend wird die Suspension vorzugsweise in einen Verweilbehälter 5 überführt. Es hat sich überraschend gezeigt, dass die Rohölausbeute innerhalb einer Verweilzeit zusätzlich vorteilhaft erhöht werden kann. Dabei wird die Sedimentation durch schonendes Rühren verhindert und verbessert so die Ausbeute. Hierfür weist der Verweilbehälter 5 ein Rührwerk 6 auf. Die Verweilzeit im Verweilbehälter 5 kann zwischen vorzugsweise 30-60 Minuten betragen. Abhängig vom Rohmaterial und der eingesetzten Säure kann die Rohölausbeute bei längerer Verweilzeit sogar wieder geringfügig abnehmen.

Von dem Verweilbehälter wird die Suspension über eine zweite Exzenterschneckenpumpe 7 zu einem Dekanter 8 transportiert. Dieser Dekanter kann als Zweiphasentrenndekanter ausgebildet sein, wobei die erste Phase aus entölter Suspension mit einem Restölgehalt von weniger als 6 Gew.-%, bezogen auf den Gehalt an Feststoffen in der Suspension, besteht und die zweite Phase aus pflanzlichem Rohöl und ggf. dispers gelöste Feststoffpartikel und Restwasser.

Alternativ zu einem Zweiphasentrenndekanter kann die Entölung auch in einem 3-Phasendekanter oder in einer Kombination aus Klärdekanter und anschließendem 3-Phasen- Separator durchgeführt werden.

Das pflanzliche Rohöl wird in einen Behälter 9 gesammelt und über eine dritte Exzenterschneckenpumpe 10 und über einen Wärmetauscher 11, vorzugsweise einen Plattenwärmetauscher, an eine Zentrifuge 12 weitergeleitet. Zwischen dem Wärmetauscher 11 und der Zentrifuge 12 ist ein Zulauf für heißes Wasser angeordnet. Dieses Wasser weist vorteilhaft eine Temperatur zwischen 60-80 °C, vorzugsweise 80-95 °C, auf. Die Zentrifuge 12 ist vorzugsweise als Dreiphasen-Separator ausgebildet, wobei im Separator sowohl eine Trennung von der Wasser und Ölphase erfolgt, als auch eine Klärung der Öl- und Wasserphasen von Feststoffpartikeln.

Aus der Zentrifuge wird somit eine klare Ölphase als Jatrophaöl abgeführt, welches durch Neutralisieren und Trocknen zu einem Produkt weiterverarbeitet werden kann, welches sich für den Einsatz als Kraftstoff in Verbrennungsmotoren eignet.

Weiterhin kann dabei der Restwassergehalt der Ölphase im Anschluss an das Ölpolieren durch Vakuumtrocknen, hier nicht dargestellt, auf einen Restwassergehalt von etwa 0,05% oder weniger gesenkt werden. Durch das Neutralisieren kann der Gehalt an freier Fettsäure reduziert werden. Ein wesentlicher Schritt bei der Optimierung zur Gewinnung von Öl aus Jatropha-Samen liegt in der Optimierung der Einstellung des pH-Wertes auf <=3,5.

Eine weitergehende vorteilhafte Erhöhung der Ausbeute wird durch die Wahl einer geeigneten Säure, der Verweilzeit, dem Verhältnis von Rohöl und Wasser und/oder Säure in der Suspension und der Feineinstellung des pH-Wertes erreicht.

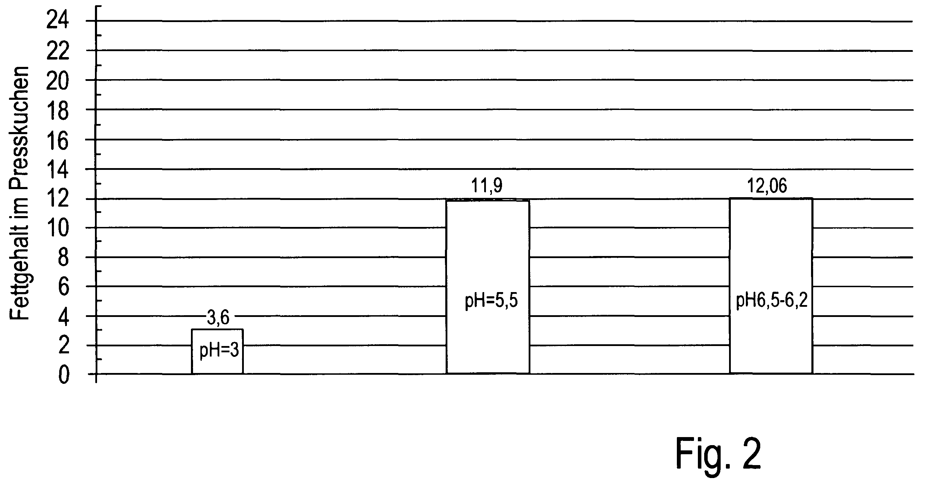

Fig.2 zeigt in einem Diagramm Messwerte des Restölgehaltes in entölten Suspensionen bei unterschiedlichen pH-Werten, welche aus einer Laborzentrifuge 8 abgeführt wurden. Dabei ist ein geringerer Restölgehalt signifikant für eine bessere Ausbeute an Jatrophaöl und einen höheren Proteingehalt im Schrot. Ein hoher Restölgehalt der Suspension mindert somit die Ausbeute des gewonnenen Jatrophaöl und verringert den Proteingehalt im Schrot.

Die Temperatur der Suspension war stets 90°C, die Verweilzeiten im Verweilbehälter waren stets 60 min und das Verhältnis Wasser zum Feststoff: Öl-Gemisch war stets 1 : 1. Die Versuche pH = 3 wurden mit Salzsäure durchgeführt. Bei der Suspension bei pH = 5,5 wurde Zitronensäure zur Einstellung des pH-Wertes benutzt.

Die unterschiedlichen Restölgehalte der im Diagramm abgebildeten Messwerte zeigen keine signifikanten Unterschiede des Restölgehaltes bei pH-Werten zwischen 5,5-6,5 zum Restölgehalt einer wässrigen Extraktion im pH-neutralen Bereich. Bei einem pH-Wert von 3,0 allerdings ist eine deutliche Verringerung des Restölgehaltes auf 3,6% zu beobachten. Wie aus dem Diagramm ersichtlich ist, wird bei einer Senkung des pH-Wertes auf unter 3,0 überraschend eine Ausbeuteerhöhung an Jatrophaöl festgestellt.

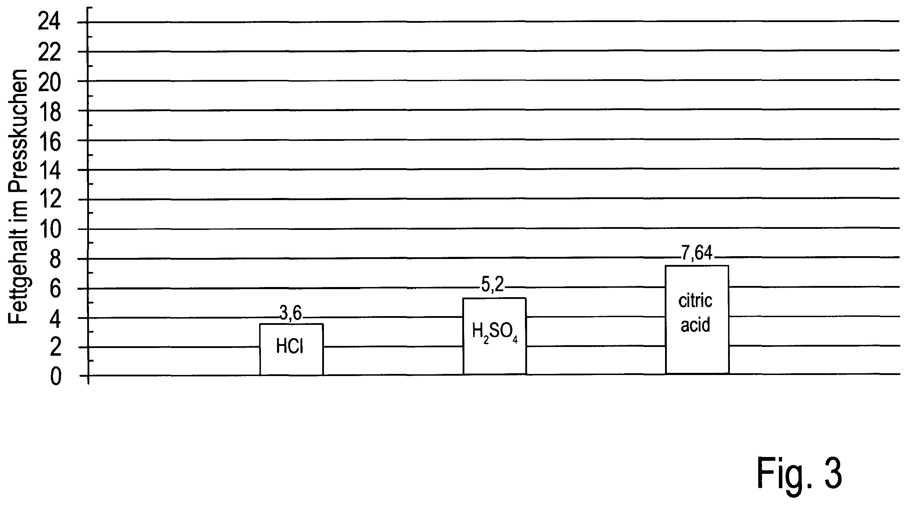

Neben dem wesentlichen Faktor des pH-Wertes, führt auch der Einsatz unterschiedlicher Säuren zu unterschiedlich hohen Ausbeuten an Jatrophaöl. Im Diagramm von Fig.3 wurde Zitronensäure, Salzsäure und Schwefelsäure in Wasser unter vergleichbaren Messbedingungen miteinander verglichen. Dabei waren die Temperaturen der Suspension stets 90°C, der pH-Wert der Lösungen war stets 3,0, die Verweilzeiten im zweiten Puffertank stets 60 min und das Verhältnis Wasser zum Feststoff-Öl-Gemisch waren stets 1+1. Dabei geht aus Fig.3 hervor, dass die Extraktion mit heißem Wasser unter Zugabe von Salzsäure gegenüber Schwefelsäure und Zitronensäure bevorzugt ist, da dabei ein besonders hoher Anteil an Jatrophaöl aus den Feststoffen der Suspension extrahiert werden kann.

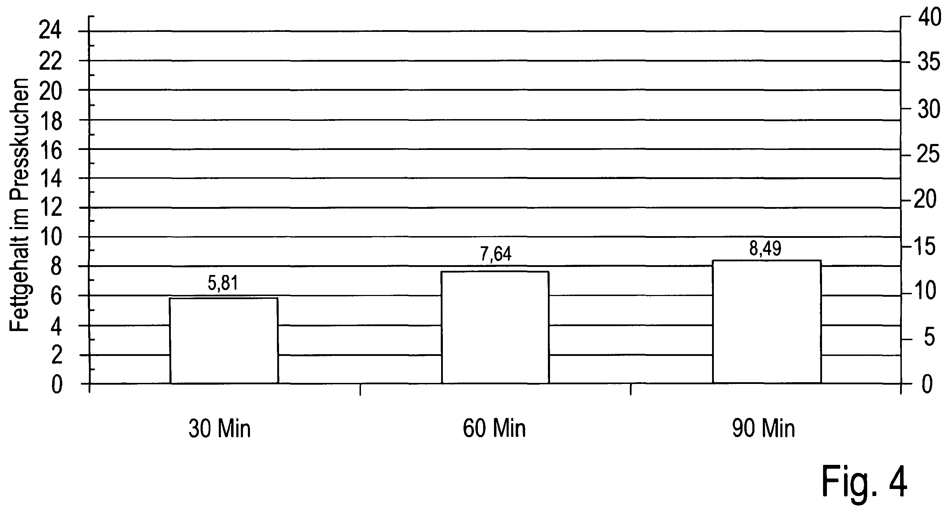

Fig.4 zeigt eine Tendenz hinsichtlich der Verweilzeiten der Suspension im Verweilbehälter. Diese Versuche wurden unter Zugabe einer wässrigen Zitronensäurelösung bei einem pH-Wert von 3.0 durchgeführt. Dabei kann man erkennen, dass eine Verweilzeit von 30 min ausreichend ist, um den Aufschluss der Ölphase aus der Suspension zu erreichen.

Eine zu lange Verweilzeit (über 60 min) im Verweilbehälter führt zu einer Erhöhung des Restölgehaltes und somit zu einer Verringerung der Gesamtausbeute. Die Abhängigkeit von der Verweilzeit ist allerdings auch zumindest teilweise von der verwendeten Säure abhängig. So hat sich die Verweilzeit von 30-60 min bei der Verwendung von HCl als besonders vorteilhaft erwiesen.

Es hat sich in Versuchen herausgestellt, dass eine zusätzliche Erhöhung der Ausbeute an Kraftstoff erreicht werden kann, sofern das Verhältnis von Wasser zu Produkt nach der Zugabe von Wasser und Säure in Schritt b) im Bereich zwischen 1/2 bis 2/1 liegt.

Der Wasseranteil in der Suspension ist größer als 35 Gew.-%, vorzugsweise größer als 40 Gew. %.

Es hat sich insbesondere gezeigt, dass ein Verhältnis von 1/1 zwischen dem

Feststoff-Ölgemisch und der wässrigen Phase, also ein Wassergehalt von etwa 50% in der Suspension, besonders vorteilhaft ist.

Nachfolgend seien anhand verschiedener Versuche Aspekte des erfindungsgemäßen Verfahrens näher erläutert.

### Versuch 1:

800 g Jatropha Saat (Wildsaat von den Cap Verden) wurden manuell mit Hilfe einer Zange gebrochen. Die Schalen wurden manuell abgetrennt. Die Brechung erfolgte so, dass nur ein geringfügiger Anteil an Feinteilen und Staub entstand.

Saat, Schalen und Fruchtfleisch wurden analysiert: Die Saat enthielt 91 % Trockensubstanz (TS), die zu 16 % aus Protein und zu 35,7 % aus Fett bestand. Die Schalenfraktion von 298 g (37,7 %) enthielt 91 % TS, die zu 3,3 % aus Protein und zu 0,4 % aus Fett bestand.

Die Kernfraktion von 502 g (62,3 %) enthielt 91 % TS, die zu 24,6 % aus Proteinen und zu 56,5 % aus Fett bestand.

Beide Fraktionen waren optisch rein getrennt, lediglich mit Spuren der jeweils anderen Fraktion.

Es zeigt sich insofern, dass durch das manuelle Schälen sehr wirksam Anteile der Jatropha-Saat entfernt werden, die einen relativ geringen Fettanteil aufweisen.

### Versuch 2:

1.013 kg Jatropha Saat (Wildsaat von den Cap Verden) wurden mittels einer Versuchsanlage der Fa. Probat geschält.

Das Brechen erfolgte mittels Reflexbrecher mit einem Spalt von 3 mm. Der Brecher wurde mit 1.300 UpM betrieben, die Durchsatzleistung betrug im Mittel 308 kg/h.

Die Abtrennung der Schalen erfolgte in einem Technikums- Windsichter. Die mittlere Durchsatzleistung betrug 296 kg/h.

Es wurden folgende Fraktionen erhalten:
1. 507 kg Kern- Fraktion (50 %)
2. 494 kg Schalen- Fraktion (48,8 %)
3. 12 kg Staubfraktion aus Abscheide Zyklon (1,2 %)

Die Schalen- Fraktion enthielt 91,4 % TS, die zu 7,3 % aus Proteinen und zu 7,8 % aus Fett besteht.

Die Kern- Fraktion enthielt 91,2 % TS, die zu 19,8 % aus Proteinen und zu 49,8 % aus Fett bestand.

Sowohl Kern- als auch Schalenfraktion wiesen optisch noch Anteile der jeweils anderen Fraktion auf.

Es zeigt sich insofern, dass auch durch das durch automatisierte Schälen im großen Umfang Anteile der Jatropha-Saat entfernet werden, die nur einen relativ geringen Fettanteil aufweisen.

### Versuch 3:

300 g geschälte, vermahlene Jatropha Saat wurde im Becherglas mit 450 g Wasser vermischt und im Wasserbad für 60 Minuten bei 90 °C gerührt. Hierbei stellte sich ein pH- Wert von 6,2 ein.

Eine weitere Probe wurde mit 90 ml HCl auf den pH- Wert von 3,0 eingestellt und ebenfalls für 60 Minuten im Wasserbad bei 90 °C gerührt.

Anschließend wurden die beiden Proben in einer heizbaren Laborzentrifuge für 3 Minuten bei 4.500 x g geschleudert.

Der Feststoff wurde anschließend auf den Restfettgehalt untersucht.

Während die Probe ohne pH- Verschiebung einen Restfettgehalt von 12,06 % (bezogen auf TS) aufwies, betrug der Restölgehalt der entölten Probe mit pH-Verschiebung lediglich 3,6.

Dies beweist den Vorteil der pH-Wert-Verschiebung.

### Versuch 4:

160 kg Wasser wurden in einem beheizbaren Rührbehälter indirekt auf 95 °C erwärmt. Anschließend wurden 112 kg geschälte, vermahlene Jatropha Saat eingegeben. Die Suspension wurde mit 5,8 kg konzentrierter Salzsäure auf einen pH-Wert von 3,0 eingestellt und die Suspension auf eine Temperatur von 90 °C eingestellt.

Die Suspension wurde für 60 Minuten im Behälter schonend gerührt.

Anschließend wurde die Suspension im 2-Phasen Trenndekanter CA 220-08-33 (Westfalia Separator Group GmbH) in eine Öl- Phase und eine Phase entölter Suspension getrennt. Die Trommeldrehzahl betrug 4.750 UpM, die Differenzdrehzahl 18 UpM.

Die Zulaufleistung betrug 300 l/h und wurde mittels regelbarer Exzenterschneckenpumpe eingestellt.

Die Ablaufleistung der Öl- Phase betrug 63 l/h.

Der entölte Feststoff enthielt 34,8 % TS, mit 5,4 % Fett bezogen auf die Trockenmasse.

### Versuch 5:

180 kg bereits entölte Jatropha Suspension mit 34,8 % TS und 5,4 % Fett (aus Versuch 4) in der Trockensubstanz wurden in einem Rührbehälter mit 50 Liter Wasser vermischt.

Die Suspension wurde für 30 Minuten schonend gerührt, und dabei mittels indirekter Wärmezuführung auf 90 °C erwärmt.

Anschließend wurde die Suspension im 2-Phasen Trenndekanter CA 220-08-33 (Westfalia Separator Group GmbH) in eine Öl- Phase und eine Phase entölter Suspension getrennt. Die Trommeldrehzahl betrug 4.750 UpM, die Differenzdrehzahl 15 UpM.

Die Zulaufleistung betrug 300 l/h und wurde mittels regelbarer Exzenterschneckenpumpe eingestellt.

Die Ablaufleistung der Öl- Phase betrug 9 l/h.

Der entölte Feststoff enthielt 29,6 % TS, mit 3,9 % Fett bezogen auf die Trockenmasse.

Der Vergleich der Beispiele 4 und 5 zeigt den Vorteil der Bildung der ölhaltigen Suspension gemäß Schritt c) des Anspruchs 1 und des Schritts d) des Anspruchs 1, insbesondere mit einem vorherigen Abtrennen des Schalenbestandteile (Versuch 4).

### Versuch 6:

36 kg so gewonnenes Jatropha Öl wurde in einem Rührbehälter mit 1 Liter Wasser vermischt und mit indirekter Wärmezuführung auf 90 °C erhitzt.

Anschließend wurde die Ölphase in einer Vollmantelzentrifuge BTC 3-03-107 (Westfalia Separator Group GmbH) in eine Öl- und eine wässrige Phase getrennt. Im Öl befindliche Feststoffe wurden in der Trommel der Zentrifuge gesammelt und nach dem Versuch entfernt.

Die wässrige Phase enthielt 2,0 % TS und wies einen Fettgehalt von 0,05 % auf.

Die Ölphase wies die folgenden Parameter auf:

Koksrückstand: 0,45 % (m/m); Oxidasche: < 0,005 % (m/m); Phosphor: < 0,5 mg/kg; Natrium: < 0,5 mg/kg; Magnesium: < 0,5 mg/kg; Calcium: < 0,5 mg/kg; Kalium: < 0,5 mg/kg; Aluminium: < 0,5 mg/kg; Eisen: < 0,5 mg/kg

Sehr wesentlich ist hier der sehr geringe Phosphat- und Magnesiumgehalt der Ölphase.

Nach dem Versuch 4 wird zunächst eine Ölphase nach dem Verfahren des Anspruchs 1 gewonnen. Wie im Anspruch 12 beschreiben, kann die Ausbeute durch ein mehrfaches Entölen verbessert werden. Dies bestätigen sehr eindrucksvoll die jeweils optionalen Entölungen der Versuche 4, 5, und 6.

### Bezugszeichenliste

- 1: Mühle
- 2: Puffertank
- 3: Exzenterschneckenpumpe
- 4: Mischstation
- 5: Verweilbehälter
- 6: Rührwerk
- 7: Exzenterschneckenpumpe
- 8: Dekanter
- 9: Puffertank
- 10: Exzenterschneckenpumpe
- 11: Wärmetauseher
- 12: Zentrifuge

## Patentansprüche

1. Verfahren zur Gewinnung eines Kraftstoffs aus Jatropha-Samen mit einem Fettgehalt von mindestens 30 Gew-%, vorzugsweise mindestens 40 Gew.-%, und gleichzeitige Gewinnung eines proteinreichen Schrotes, **gekennzeichnet durch** die folgenden Schritte:
a) Abtrennen von Schalenanteilen
b) Zerkleinern der geschälten Samen;
c) Zugabe von Wasser und Säure zu den zerkleinerten Pflanzensamen unter Bildung einer ölhaltigen Suspension , derart, dass der Wasseranteil der Suspension größer als 35 Gew.-%, bezogen auf die Gesamtmasse der Suspension, ist,
d) Abscheiden von Rohöl aus der Suspension wobei der pH-Wert der Suspension vor dem Abscheiden von Rohöl <= 3,5 ist;
e) Ölpolieren des Öls bzw. Rohöls;
f) Neutralisieren; und
g) Trocknen des Öls.

2. Verfahren nach Anspruch 1, **dadurch gekennzeichnet, dass** in einem Schritt h) ein Trocknen des entölten Schrotes erfolgt.

3. Verfahren nach Anspruch 1 oder 2, **dadurch gekennzeichnet, dass** der pH-Wert des zugegebenen Wassers <= 3,2 ist.

4. Verfahren nach Anspruch 2 oder 3, **dadurch gekennzeichnet, dass** die Einstellung des pH-Wertes der Suspension vor dem Abscheiden der Ölphase durch Salzsäure erfolgt.

5. Verfahren nach einem der vorhergehenden Ansprüche, **dadurch gekennzeichnet, dass** nach der Zugabe von Wasser und Säure eine Verweilzeit von mindestens 30 min, vorzugsweise 30-60 min, eingehalten wird.

6. Verfahren nach einem der vorhergehenden Ansprüche, **dadurch gekennzeichnet, dass** das Abscheiden der Ölphase aus der Suspension in einem Zentrifugalfeld, insbesondere eines Dekanters bzw. mit einem Dekanter (8), erfolgt.

7. Verfahren nach einem der vorhergehenden Ansprüche, **dadurch gekennzeichnet, dass** die ölhaltige Suspension vor dem Abscheiden der Ölphase eine Temperatur von 60-80°C aufweist.

8. Verfahren nach einem der Ansprüche 1 bis 6 **dadurch gekennzeichnet, dass** die ölhaltige Suspension vor dem Abscheiden der Ölphase eine Temperatur von 80-95°C aufweist.

9. Verfahren nach einem der vorhergehenden Ansprüche, **dadurch gekennzeichnet, dass** ein Wasser-zu-Produkt-Verhältnis im Bereich von 1/2 bis 2/1 aufweist.

10. Verfahren nach einem der vorhergehenden Ansprüche, **dadurch gekennzeichnet, dass** der Wasseranteil der Suspension größer als 40 Gew.-%, bezogen auf die Gesamtmasse der Suspension, ist

11. Verfahren nach einem der vorhergehenden Ansprüche, **dadurch gekennzeichnet, dass** vor dem Zerkleinern der Pflanzensamen oder Nüssen ein Reinigen der Pflanzensamen oder Nüsse erfolgt.

12. Verfahren nach einem der vorhergehenden Ansprüche, **dadurch gekennzeichnet, dass** nach dem optionalen Reinigen und vor dem Zerkleinern der Pflanzensamen oder Nüssen ein Trocknen der Pflanzensamen oder Nüsse erfolgt.

13. Verfahren nach einem der vorhergehenden Ansprüche, **dadurch gekennzeichnet, dass** das Abscheiden der Ölphase durch eine mehrfache Entölung aus der Suspension erfolgt.

14. Verfahren nach einem der vorhergehenden Ansprüche, **dadurch gekennzeichnet, dass** die Suspension nach einer ersten Extraktion der Ölphase aus der Suspension einen Restölgehalt von weniger als 4% Gew.-%, bezogen auf die Gesamtmasse an Feststoffen in der Suspension, aufweist.

15. Verfahren nach einem der vorhergehenden Ansprüche, **dadurch gekennzeichnet, dass** das Ölpolieren der Ölphase in einer Zentrifuge (12), vorzugsweise einem Separator, erfolgt.

## Claims

1. Method for obtaining a fuel from jatropha seeds having a fat content of at least 30% by weight, preferably
at least 40% by weight, and simultaneously obtaining a protein-rich meal, **characterized by** the following steps:
a) removal of husk components;
b) comminution of the dehulled seeds;
c) addition of water and acid to the comminuted plant seeds to form an oil-containing suspension such that the water content of the suspension is greater than 35 % by weight, based on the total mass of the suspension,
d) separation of crude oil from the suspension wherein the pH value of the suspension before separation of crude oil is <= 3.5;
e) oil polishing of the oil or crude oil;
f) neutralization; and
g) drying of the oil.

2. Method according to Claim 1, **characterized in that** drying of the de-oiled meal is carried out in a step h).

3. Method according to Claim 1 or 2, **characterized in that** the pH value of the added water is <= 3.2.

4. Method according to Claim 2 or 3, **characterized in that** the pH value of the suspension is adjusted with hydrochloric acid before separation of the oil phase.

5. Method according to one of the preceding claims, **characterized in that**, after the addition of water and acid, a dwell time of at least 30 minutes, preferably from 30 to 60 minutes, is observed.

6. Method according to one of the preceding claims, **characterized in that** the separation of the oil phase from the suspension is carried out in a centrifugal field, in particular of a decanter, or using a decanter (8).

7. Method according to one of the preceding claims, **characterized in that** the oil-containing suspension has a temperature of from 60 to 80°C before separation of the oil phase.

8. Method according to one of Claims 1 to 6, **characterized in that** the oil-containing suspension has a temperature of from 80 to 95°C before separation of the oil phase.

9. Method according to one of the preceding claims, **characterized in that** has a water-to-product ratio in the range of from 1/2 to 2/1.

10. Method according to one of the preceding claims, **characterized in that** the water content of the suspension is greater than 40 % by weight, based on the total mass of the suspension.

11. Method according to one of the preceding claims, **characterized in that** cleaning of the plant seeds or nuts is carried out prior to comminution of the plant seeds or nuts.

12. Method according to one of the preceding claims, **characterized in that** drying of the plant seeds or nuts is carried out after the optional cleaning and before comminution of the plant seeds or nuts.

13. Method according to one of the preceding claims, **characterized in that** the separation of the oil phase is carried out by repeated de-oiling from the suspension.

14. Method according to one of the preceding claims, **characterized in that**, after a first extraction of the oil phase from the suspension, the suspension has a residual oil content of less than 4% by weight, based on the total mass of solids in the suspension.

15. Method according to one of the preceding claims, **characterized in that** the oil polishing of the oil phase is carried out in a centrifuge (12), preferably in a separator.

## Revendications

1. Procédé pour produire un carburant à partir de graines de jatropha ayant une teneur en matière grasse d'au moins 30 % en poids, de préférence au moins 40 % en poids, et extraire en même temps un tourteau riche en protéines, **caractérisé en ce qu'**il comprend les étapes suivantes :
a) séparation des coquilles ;
b) broyage des graines décortiquées ;
c) ajout d'eau et d'acide aux graines végétales décortiquées pour former une suspension huileuse, de telle façon que la part d'eau dans la suspension soit supérieure à 35 % en poids par rapport à la masse totale de la suspension ;
d) séparation de l'huile brute de la suspension, dont le pH avant la séparation de l'huile brute est ≤ 3,5 ;
e) purification de l'huile ou de l'huile brute ;
f) neutralisation et
g) séchage de l'huile.

2. Procédé selon la revendication 1, **caractérisé en ce que** le tourteau déshuilé est séché dans une étape h).

3. Procédé selon la revendication 1 ou 2, **caractérisé en ce que** le pH de l'eau ajoutée est ≤ 3,2.

4. Procédé selon la revendication 2 ou 3, **caractérisé en ce que** l'ajustement du pH de la suspension avant la séparation de la phase huileuse est réalisé avec de l'acide chlorhydrique.

5. Procédé selon l'une des revendications précédentes, **caractérisé en ce qu'**après l'ajout d'eau et d'acide, un temps de repos d'au moins 30 minutes, de préférence de 30 à 60 minutes, est ménagé.

6. Procédé selon l'une des revendications précédentes, **caractérisé en ce que** la séparation de la phase huileuse de la suspension est effectuée dans un champ centrifuge, en particulier d'un décanteur, ou avec un décanteur (8).

7. Procédé selon l'une des revendications précédentes, **caractérisé en ce que** la suspension contenant l'huile présente avant la séparation de la phase huileuse une température de 60 à 80 °C.

8. Procédé selon l'une des revendications 1 à 6, **caractérisé en ce que** la suspension contenant l'huile présente avant la séparation de la phase huileuse une température de 80 à 98 °C.

9. Procédé selon l'une des revendications précédentes, **caractérisé en ce qu'**un rapport entre eau et produit se situe entre 1 pour 2 et 2 pour 1.

10. Procédé selon l'une des revendications précédentes, **caractérisé en ce que** la proportion d'eau dans la suspension est supérieure à 40 % par rapport à la masse totale de la suspension.

11. Procédé selon l'une des revendications précédentes, **caractérisé en ce que** le broyage des graines de plante ou des noix est précédé d'un lavage des graines ou des noix.

12. Procédé selon l'une des revendications précédentes, **caractérisé en ce que** le nettoyage facultatif et le broyage des graines de plante ou des noix est suivi d'un séchage des graines ou des noix.

13. Procédé selon l'une des revendications précédentes, **caractérisé en ce que** la séparation de la phase huileuse est réalisée par un déshuilage à plusieurs reprises de la suspension.

14. Procédé selon l'une des revendications précédentes, **caractérisé en ce qu'**après une première extraction de la phase huileuse à partir de la suspension, celle-ci contient un taux d'huile résiduelle de moins de 4 % en poids par rapport à la masse totale des solides dans la suspension.

15. Procédé selon l'une des revendications précédentes, **caractérisé en ce que** la purification de la phase huileuse est effectuée dans une centrifugeuse (12), de préférence dans un séparateur.
